# EUROPÄISCHE PATENTSCHRIFT

(11) **EP 3 781 755 B1**
(45) Veröffentlichungstag und Bekanntmachung des Hinweises auf die Patenterteilung: **28.12.2022**
(21) Anmeldenummer: 20746105.4
(22) Anmeldetag: 22.06.2020
(51) Int. Cl.: E04B 1/58, E04B 1/19, E04B 1/348

(54) **KOPPLUNGSVORRICHTUNG FÜR DEN MODULAREN AUFBAU VON BAUWERKEN ODER GEGENSTÄNDEN**
COUPLING DEVICE FOR THE MODULAR CONSTRUCTION OF STRUCTURES OR OBJECTS
DISPOSITIF D'ACCOUPLEMENT POUR LA CONSTRUCTION MODULAIRE DE BÂTIMENTS OU D'OBJETS

(30) Priorität: 10.07.2019 DE 102019210175
(43) Veröffentlichungstag der Anmeldung: 24.02.2021
(60) Teilanmeldung: 22180935.3
(73) Patentinhaber: Pacarada, Elvir, 65779 Kelkheim (Taunus) (DE); Pacarada, Ernest, 65779 Kelkheim (Taunus) (DE)
(72) Erfinder: PACARADA, Elvir, 65779 Kelkheim (Taunus) (DE)
(74) Vertreter: Ullrich & Naumann PartG mbB
(86) Internationale Anmeldenummer: PCT/DE2020/200051
(87) Internationale Veröffentlichungsnummer: WO 2021/004590

(56) Entgegenhaltungen:
- US-A1- 2012 301 215
- US-A1- 2015 377 414

## Beschreibung

Die Erfindung betrifft eine Kopplungsvorrichtung für den modularen Aufbau von Bauwerken oder Gegenständen, mit einem mindestens einen Durchgang oder mindestens eine Ausnehmung aufweisenden und mit mindestens einem Bauelement eines Bauwerks oder Gegenstands koppelbaren Grundkörper, wobei der mindestens eine Durchgang oder die mindestens eine Ausnehmung zum Zusammenwirken mit einem Kopplungsmittel für ein Koppeln des mindestens einen Bauelements mit dem Grundkörper ausgebildet ist.

Aus der DE 196 36 294 C1 ist bereits eine Kopplungsvorrichtung bekannt, die zum Koppeln zweier Bauelemente in Form von Containern 6 dient. Die bekannte Kopplungsvorrichtung weist einen in Form eines Distanzstücks 20, 40 ausgebildeten Grundkörper auf, der einen Durchgang 28 für ein Kopplungsmittel in Form einer Gewindestange 16 aufweist. Die Gewindestange 16 weist zwei aufschraubbare Hammerstücke 18, 42 auf, die in Langlöcher 14 der Container 6 einsteckbar sind und dort mit den Containern 6 eingreifen. Hierdurch ist ein starres Verbinden der Container 6 miteinander möglich.

Bei der bekannten Kopplungsvorrichtung ist jedoch problematisch, dass die gesamte Kopplungsvorrichtung mit ihrem zum Durchstecken der Gewindestange 16 ausgebildeten Distanzstück 20, 40 einen erheblichen Raumbedarf aufweist, sodass die miteinander gekoppelten Container 6 im gekoppelten Zustand relativ weit, nämlich den Ausmaßen des Distanzstücks 20, 40 entsprechend voneinander beabstandet sind. Ein derartiger großer Abstand zwischen den Containern 6 ist insbesondere im Falle mehrerer miteinander gekoppelter Container 6 nicht wünschenswert, da aufgrund der großen Abstände zwischen den miteinander gekoppelten Containern 6 hohe statische Erfordernisse des Gesamtaufbaus aus den mehreren Containern 6 oder Bauelementen häufig nicht erfüllt werden können. Des Weiteren wird aufgrund der großen Abstände zwischen den Containern 6 üblicherweise kostspieliger Raum in Lagern oder Transportvorrichtungen wie beispielsweise Schiffen letztendlich nutzlos verschwendet.

Des Weiteren ist aus der US 2015/377414 A1 eine Kopplungsvorrichtung für den modularen Aufbau von Bauwerken oder Gegenständen aufweisend die Merkmale des Oberbegriffes des Anspruchs 1 bekannt. Die bekannte Kopplungsvorrichtung weist ein Positionierelement 24 auf.

Der vorliegenden Erfindung liegt daher die Aufgabe zugrunde, eine Kopplungsvorrichtung der eingangs genannten Art derart auszugestalten und weiterzubilden, dass ein einfaches und sicheres Aufbauen von Bauwerken oder Gegenständen mit konstruktiv einfachen Mitteln ermöglicht ist.

Erfindungsgemäß wird die voranstehende Aufgabe durch eine Kopplungsvorrichtung mit den Merkmalen des Anspruchs 1 gelöst.

Dabei ist der Grundkörper im konkreten als Eckelement oder Randelement eines Moduls des zu errichtenden Bauwerks oder Gegenstands ausgebildet. Mit anderen Worten bildet der Grundkörper einen Bestandteil eines derartigen Moduls in einem Eckbereich oder Randbereich des Moduls und weist nicht - wie beim Stand der Technik - ein zusätzliches Distanz- oder Zwischenstück zur Anordnung zwischen zwei Bauelementen oder Modulen mit der Konsequenz eines entsprechend großen Abstands zwischen den zu koppelnden Bauelementen oder Modulen auf. Folglich können die zu koppelnden Bauelemente oder Module mit der erfindungsgemäßen Kopplungsvorrichtung im gekoppelten Zustand sehr eng aneinander angeordnet sein. Hierdurch kann ganz erheblich kostspieliger Raum eingespart werden. Darüber hinaus ist eine eng beabstandete Anordnung zu koppelnder Bauelemente oder Module in statischer Hinsicht besonders vorteilhaft. Auch voluminöse auf modularer Basis errichtete Bauwerke oder Gegenstände genügen dabei hohen statischen Anforderungen und können hohen Gewichtsbelastungen standhalten. Die erfindungsgemäße Kopplungsvorrichtung ist aufgrund des Zusammenwirkens geeigneter Durchgänge oder Ausnehmungen mit entsprechenden Kopplungsmitteln für ein Koppeln mittels Verschraubung geeignet, sodass auf ein zeitintensives Erzeugen von im Stand der Technik üblichen Schweißverbindungen zwischen zu koppelnden Bauelementen oder Komponenten verzichtet werden kann. Ein Rückbauen oder Auseinanderbauen von mittels der erfindungsgemäßen Kopplungsvorrichtung errichteten Bauwerken oder Gegenständen ist - beim Einsatz von Schraubverbindungen - somit ebenfalls möglich.

Folglich ist mit der erfindungsgemäßen Kopplungsvorrichtung eine Kopplungsvorrichtung bereitgestellt, mit der ein einfaches und sicheres Aufbauen von Bauwerken oder Gegenständen mit konstruktiv einfachen Mitteln ermöglicht ist.

Die Kopplungsvorrichtung kann im Hinblick auf einen besonders stabilen Aufbau von Bauwerken oder Gegenständen einen Grundkörper aus Metall, insbesondere aus Stahl, aufweisen. Es können jedoch - je nach Anwendungsfall - auch andere Materialien wie beispielsweise Kunststoff oder Holz für die Herstellung des Grundkörpers verwendet werden.

Im Hinblick auf ein besonders sicheres Aufbauen eines Bauwerks oder Gegenstands ist dem Grundkörper mindestens ein im Wesentlichen zwischen dem Grundkörper und dem mindestens einen Bauelement wirkendes erstes Verbindungselement zugeordnet. Ein derartiges erstes Verbindungselement kann eine Adaption hinsichtlich des Aneinanderkoppelns von Grundkörper und Bauelement bei unterschiedlich ausgestalteten Grundkörpern und Bauelementen und damit eine sichere Kopplung zwischen Grundkörper und Bauelement bereitstellen.

Hinsichtlich einer besonders stabilen und sicheren Verbindung zwischen beim Aufbau oder in einem Endzustand eines Bauwerks oder Gegenstands nebeneinander angeordneten Grundkörpern ist dem Grundkörper mindestens ein zwei oder mehrere Grundkörper koppelndes, vorzugsweise flächiges zweites Verbindungselement zugeordnet. Ein derartiges zweites Verbindungselement kann in einer an die Grundkörper angelegten Verbindungsposition mehrere Grundkörper, beispielsweise zwei, drei oder vier Grundkörper, überdecken.

Zur Gewährleistung eines besonders einfachen und schnellen Aufbaus eines Bauwerks oder Gegenstands weisen oder weist das mindestens eine erste Verbindungselement und/oder das mindestens eine zweite Verbindungselement jeweils mindestens ein Positionierelement zum kraft- und/oder formschlüssigen Zusammenwirken mit mindestens einem entsprechenden - vorzugsweise komplementär zu dem mindestens einen Positionierelement ausgebildeten - Gegenelement des Grundkörpers auf. Beispielsweise kann mittels eines derartigen Positionierelements und Gegenelements eine das Bauwerk oder den Gegenstand aufbauende Person ein besonders schnelles und sicheres Positionieren des ersten Verbindungselements und/oder des zweiten Verbindungselements relativ zu dem Grundkörper vornehmen, um dadurch einen schnellen Aufbaufortschritt zu erreichen.

Hierzu können in besonders vorteilhafter Weise das mindestens eine Positionierelement als von dem mindestens einen ersten oder zweiten Verbindungselement abragendes Eingriffselement und das mindestens eine Gegenelement als Vertiefung in dem Grundkörper ausgebildet sein oder können alternativ hierzu das mindestens eine Positionierelement als Vertiefung in dem mindestens einen ersten oder zweiten Verbindungselement und das mindestens eine Gegenelement als von dem Grundkörper abragendes Eingriffselement ausgebildet sein. Durch ein Einstecken des Eingriffselements in die Vertiefung oder ein Aufstecken der Vertiefung auf das Eingriffselement kann ein besonders einfacher Positioniervorgang bereitgestellt sein.

Im Hinblick auf eine besonders sichere Verbindung zwischen Grundkörper und erstem oder zweitem Verbindungselement können oder kann das mindestens eine Positionierelement und/oder das mindestens eine Gegenelement - vorzugsweise mittig oder zentral - auf oder in jeweils einem flächigen Bereich des Grundkörpers oder des mindestens einen ersten oder zweiten Verbindungselements ausgebildet sein. Dabei können in weiter besonders sicherer Weise die flächigen Bereiche des Grundkörpers und des mindestens einen ersten oder zweiten Verbindungselements im verbundenen Zustand von Grundkörper und erstem oder zweitem Verbindungselement aneinander liegen. Vorzugsweise können das Positionierelement und/oder das Gegenelement mittig oder zentral auf den jeweiligen flächigen Bereichen ausgebildet sein, um eine von äußeren Einflüssen geschützte Anordnung von Positionierelement und Gegenelement bereitzustellen.

Um nicht nur eine Positioniersicherheit hinsichtlich einer Verschiebung von Positionierelement und Gegenelement in einer zu einer Kopplungsrichtung im Wesentlichen senkrecht verlaufenden Verschiebeebene relativ zueinander zu ermöglichen, sondern auch im Hinblick auf eine Rotation um eine zur Kopplungsrichtung im Wesentlichen parallelen Achse, weisen oder weist das mindestens eine Positionierelement und/oder das mindestens eine Gegenelement eine im Wesentlichen rechteckige oder quadratische Form mit abgeschrägten Seitenbereichen oder Seitenflächen auf. Dabei trägt die rechteckige oder quadratische Form zu der Positioniersicherheit im Hinblick auf eine Rotation bei und bieten abgeschrägte Seitenbereiche oder Seitenflächen des Positionierelements oder des Gegenelements ein einfaches Ineinanderstecken von Positionierelement und Gegenelement während eines Gleitens der abgeschrägten Seitenbereiche oder Seitenflächen von jeweils Positionierelement und Gegenelement aneinander.

Weiterhin zur Gewährleistung eines besonders einfachen und schnellen Aufbaus eines Bauwerks oder Gegenstands kann das mindestens eine erste Verbindungselement mindestens ein Positionierelement zum - vorzugsweise kraft- und/oder formschlüssigen - Zusammenwirken mit mindestens einem entsprechenden - vorzugsweise komplementär zu dem mindestens einen Positionierelement ausgebildeten - Gegenelement des mindestens einen Bauelements aufweisen. Beispielsweise kann mittels eines derartigen Positionierelements und Gegenelements eine das Bauwerk oder den Gegenstand aufbauende Person ein besonders schnelles und sicheres Positionieren des ersten Verbindungselements relativ zu dem Bauelement vornehmen, um dadurch einen schnellen Aufbaufortschritt zu erreichen.

Hierzu können in besonders vorteilhafter Weise das mindestens eine Positionierelement als von dem mindestens einen ersten Verbindungselement abragendes Einsteck- oder Eingriffselement und das mindestens eine Gegenelement als Ausnehmung oder Durchgang in dem mindestens einen Bauelement ausgebildet sein oder können das mindestens eine Positionierelement als Ausnehmung oder Durchgang in dem mindestens einen ersten Verbindungselement und das mindestens eine Gegenelement als von dem mindestens einen Bauelement abragendes Einsteck- oder Eingriffselement ausgebildet sein. Durch ein Einstecken des Einsteck- oder Eingriffselements in die Ausnehmung oder in den Durchgang oder ein Aufstecken der Ausnehmung oder des Durchgangs auf das Einsteck- oder Eingriffselement kann ein besonders einfacher Positioniervorgang bereitgestellt sein.

Im Hinblick auf eine besonders sichere Verbindung zwischen dem ersten Verbindungselement und dem Bauelement können oder kann das mindestens eine Positionierelement und/oder das mindestens eine Gegenelement - vorzugsweise mittig oder zentral - auf oder in jeweils einem flächigen Bereich des mindestens einen ersten Verbindungselements oder des mindestens einen Bauelements ausgebildet sein. Dabei können in weiter besonders sicherer Weise die flächigen Bereiche des ersten Verbindungselements und des Bauelements im verbundenen Zustand von erstem Verbindungselement und Bauelement aneinander liegen. Vorzugsweise können das Positionierelement und/oder das Gegenelement mittig oder zentral auf den jeweiligen flächigen Bereichen ausgebildet sein, um eine von äußeren Einflüssen geschützte Anordnung von Positionierelement und Gegenelement bereitzustellen.

Um nicht nur eine Positioniersicherheit hinsichtlich einer Verschiebung von Positionierelement und Gegenelement in einer zu einer Kopplungsrichtung im Wesentlichen senkrecht verlaufenden Verschiebeebene relativ zueinander zu ermöglichen, sondern auch im Hinblick auf eine Rotation um eine zur Kopplungsrichtung im Wesentlichen parallelen Achse, können oder kann das mindestens eine Positionierelement und/oder das mindestens eine Gegenelement eine im Wesentlichen rechteckige oder quadratische Form oder Querschnittsform mit vorzugsweise abgeschrägten Seitenbereichen oder Seitenflächen aufweisen oder aufweist. Dabei trägt die rechteckige oder quadratische Form oder Querschnittsform zu der Positioniersicherheit im Hinblick auf eine Rotation bei und bieten abgeschrägte Seitenbereiche oder Seitenflächen des Positionierelements oder des Gegenelements ein einfaches Ineinanderstecken von Positionierelement und Gegenelement während eines Gleitens der abgeschrägten Seitenbereiche oder Seitenflächen von jeweils Positionierelement und Gegenelement aneinander.

Im Hinblick auf eine besonders sichere Kopplung zwischen Bauelement und Grundkörper und auch zwischen einem ersten und/oder einem zweiten Verbindungselement und dem Grundkörper kann der mindestens eine Durchgang oder die mindestens eine Ausnehmung in dem Grundkörper ein Innengewinde zum Zusammenwirken mit dem Kopplungsmittel aufweist. Hierdurch ist ein einfaches Koppeln der jeweiligen Komponenten miteinander durch eine Verschraubung möglich. Auf zeitintensive und nur sehr schwer reversible Schweißverbindungen kann verzichtet werden. Bei einer besonders vorteilhaften Ausgestaltung eines Grundkörpers können mehrere oder auch sämtliche Durchgänge oder Ausnehmungen in dem Grundkörper ein geeignetes Innengewinde zum Zusammenwirken mit einem Kopplungsmittel, beispielsweise eine Schraube oder ein Schraubbolzen, aufweisen.

Ebenfalls im Hinblick auf eine sichere Kopplung zwischen einem ersten und/oder einem zweiten Verbindungselement und dem Grundkörper können oder kann das mindestens eine erste Verbindungselement und/oder das mindestens eine zweite Verbindungselement mindestens einen Durchgang für das Kopplungsmittel aufweisen.

Zur Gewährleistung einer möglichst nah aneinander liegenden Anordnung der einzelnen Komponenten aneinander, ohne dass unerwünschte Zwischenräume zwischen den Komponenten oder störende Überstände von Kopplungsmitteln, beispielsweise Schrauben, erzeugt werden, kann der mindestens eine Durchgang für das Kopplungsmittel in dem mindestens einen ersten Verbindungselement und/oder in dem mindestens einen zweiten Verbindungselement eine vorzugsweise schräg oder konisch ausgebildete Vertiefung oder Einsenkung für das Kopplungsmittel aufweisen. Hierdurch ist eine versenkte Anordnung eines Kopplungsmittels, beispielsweise einer Schraube, in einer jeweiligen Komponente im gekoppelten Zustand von Komponenten oder im zusammengebauten Zustand des Bauwerks oder Gegenstands ermöglicht.

Bei einer weiteren vorteilhaften Ausführungsform der erfindungsgemäßen Kopplungsvorrichtung kann in mindestens einem der Positionierelemente oder Gegenelemente des Grundkörpers, des mindestens einen ersten Verbindungselements und/oder des mindestens einen zweiten Verbindungselements ein Durchgang für das Kopplungsmittel ausgebildet sein. Hierdurch kann ein Positionierelement oder Gegenelement in platzsparender Weise nicht nur seine Positionieraufgabe sondern auch eine Kopplungsfunktion erfüllen.

Bei einer besonders einfachen Ausgestaltung der erfindungsgemäßen Kopplungsvorrichtung können oder kann der Grundkörper als Quader oder Würfel und/oder das Bauelement als Vierkantrohr oder Rundrohr ausgebildet sein. Bei der konkreten Ausgestaltung kann auf den jeweiligen Anwendungsfall abgestellt werden.

Die erfindungsgemäße Kopplungsvorrichtung kann mit dem Grundkörper und dem ersten und/oder zweiten Verbindungselement ein einfaches, sicheres und vielseitiges System für den modularen Aufbau von Bauwerken oder Gegenständen bereitstellen. Dabei können Bauwerke in Form von beliebigen Häusern, beispielsweise Wohnhäuser, oder Gegenstände in Form von beispielsweise Möbeln aufgebaut werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der erfindungsgemäßen Kopplungsvorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in perspektivischen Darstellungen ein Ausführungsbeispiel der erfindungsgemäßen Kopplungsvorrichtung, einmal in einem zusammengebauten Zustand und einmal in einer Explosionsdarstellung,
- Fig. 2: in zwei perspektivischen Darstellungen das erste Verbindungselement der Kopplungsvorrichtung aus Fig. 1,
- Fig. 3: in einer perspektivischen Darstellung das zweite Verbindungselement der Kopplungsvorrichtung aus Fig. 1,
- Fig. 4: in einer perspektivischen Darstellung, teilweise als Explosionsdarstellung, ein mit einer erfindungsgemäßen Kopplungsvorrichtung aufzubauendes Modul eines Bauwerks,
- Fig. 5: in einer perspektivischen Darstellung, teilweise als Explosionsdarstellung, ein mit erfindungsgemäßen Kopplungsvorrichtung aufzubauendes erweitertes Modul eines Bauwerks,
- Fig. 6: in einer perspektivischen Darstellung, teilweise als Explosionsdarstellung, das Zusammenfügen mehrerer Module eines Bauwerks mittels der erfindungsgemäßen Kopplungsvorrichtung und
- Fig. 7: in einer perspektivischen Darstellung die Module aus Fig. 6 im zusammengebauten Zustand.

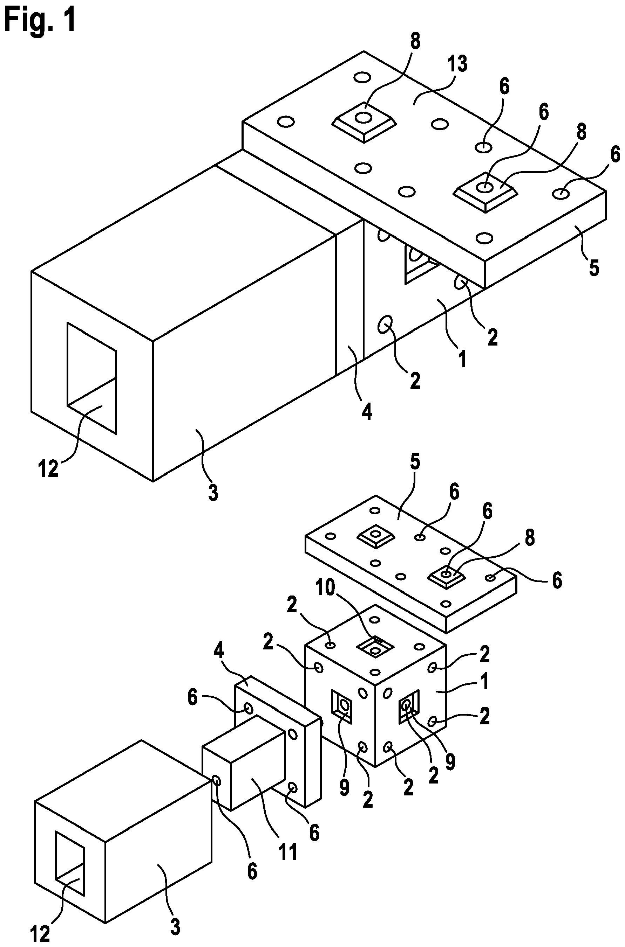

Fig. 1 zeigt in perspektivischen Darstellungen ein Ausführungsbeispiel der erfindungsgemäßen Kopplungsvorrichtung, wobei im oberen Bereich der Fig. 1 ein zusammengebauter Zustand eines Teils eines zu errichtenden Bauwerks oder Gegenstands und im unteren Bereich der Fig. 1 die entsprechenden Komponenten aus dem oberen Bereich in einer Explosionsdarstellung gezeigt sind. Dabei ist eine Kopplungsvorrichtung für den modularen Aufbau von Bauwerken oder Gegenständen gezeigt, die einen Grundkörper 1 aufweist, der mehrere Durchgänge 2 aufweist und mit einem Bauelement 3 des Bauwerks koppelbar ist. Die Durchgänge 2 sind zum Zusammenwirken mit einem Kopplungsmittel, beispielsweise eine Schraube, für ein Koppeln des Bauelements 3 mit dem Grundkörper 1 ausgebildet. Dabei sind der Grundkörper 1 und das Bauelement 3 über ein erstes Verbindungselement 4 aus Metall, vorzugsweise Stahl, miteinander gekoppelt. Darüber hinaus ist in Fig. 1 noch ein flächiges zweites Verbindungselement 5 aus Metall, vorzugsweise Stahl, gezeigt, das zum Koppeln zweier oder mehrerer Grundkörper 1 miteinander dient.

Der Grundkörper 1 ist im Hinblick auf ein besonders einfaches und sicheres Koppeln mehrerer Bauelemente 3 oder Module eines Bauwerks oder Gegenstands miteinander als Eckelement oder Randelement eines derartigen Moduls ausgebildet.

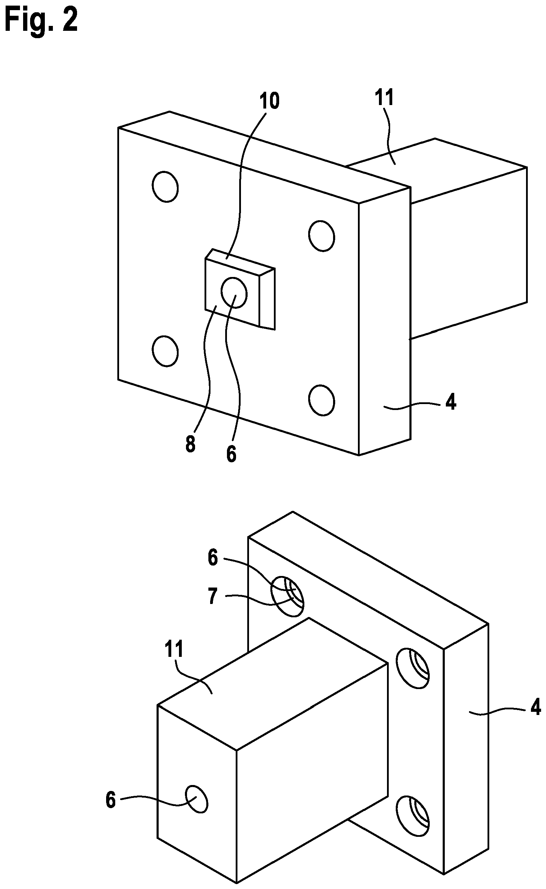

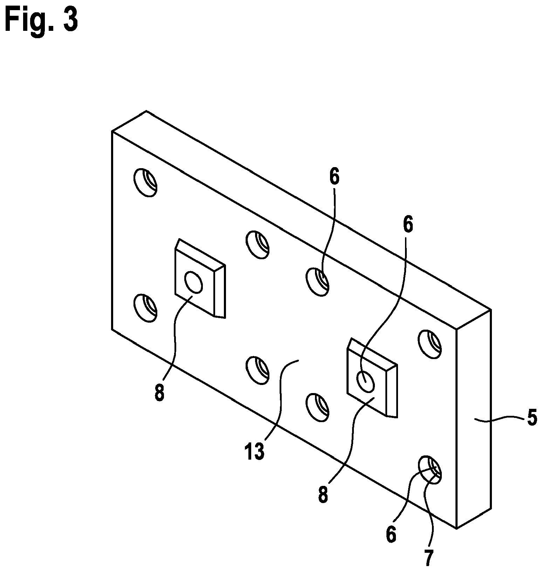

Das erste Verbindungselement 4 ist weiterhin in zwei vergrößerten perspektivischen Darstellungen von unterschiedlichen Seiten aus in Fig. 2 gezeigt. Das zweite Verbindungselement 5 ist weiterhin in einer vergrößerten perspektivischen Darstellung in Fig. 3 gezeigt.

Sowohl das erste Verbindungselement 4 als auch das zweite Verbindungselement 5 weisen Durchgänge 6 zum Ein- oder Durchstecken eines Kopplungsmittels auf, die zum Versenken oder Einsenken des Kopplungsmittels eine Vertiefung 7 aufweisen, die schräg oder konisch ausgebildet sein kann.

Des Weiteren weist das erste Verbindungselement 4 ein Positionierelement 8 zum formschlüssigen Zusammenwirken mit einem komplementär zu dem Positionierelement 8 ausgebildeten Gegenelement 9 des Grundkörpers 1 auf. Dabei ist das Positionierelement 8 als von dem ersten Verbindungselement 4 abragendes Eingriffselement und das Gegenelement 9 als Vertiefung in dem Grundkörper 1 ausgebildet. Sowohl das Positionierelement 8 als auch das Gegenelement 9 sind mittig in jeweils einem flächigen Bereich des ersten Verbindungselements 4 und des Grundkörpers 1 ausgebildet. Sowohl in dem Positionierelement 8 als auch in dem Gegenelement 9 ist jeweils ein Durchgang 6, 2 für ein Kopplungsmittel ausgebildet.

Das Positionierelement 8 und das Gegenelement 9 weisen jeweils eine im Wesentlichen quadratische Form mit abgeschrägten Seitenflächen 10 auf, wobei die quadratische Form eine Sicherung gegen ein gegenseitiges Rotieren des ersten Verbindungselements 4 und des Grundkörpers 1 im zusammengebauten Zustand bildet. Hierdurch ist die Positioniersicherheit hinsichtlich eines Rotierens gewährleistet. Die abgeschrägten Seitenflächen 10 erleichtern das Einstecken des Positionierelements 8 in das Gegenelement 9 und damit das Positionieren des ersten Verbindungselements 4 relativ zum Grundkörper 1 beim Zusammenbau.

Des Weiteren weist das erste Verbindungselement 4 ein Positionierelement 11 zum formschlüssigen Zusammenwirken mit einem komplementär zu dem Positionierelement 11 ausgebildeten Gegenelement 12 des Bauelements 3 auf. Das Positionierelement 11 ist als von dem ersten Verbindungselement 4 abragendes Einsteck- oder Eingriffselement und das Gegenelement 12 als Durchgang in dem Bauelement 3 ausgebildet. Sowohl das Positionierelement 11 als auch das Gegenelement 12 weisen eine rechteckige Querschnittsform auf, um im eingesteckten Zustand des Einsteck- oder Eingriffselements in den Durchgang eine Sicherung gegen ein ungewünschtes Verdrehen des ersten Verbindungselements 4 relativ zum Bauelement 3 zu gewährleisten. Sowohl das Positionierelement 11 als auch das Gegenelement 12 sind mittig in jeweils einem flächigen Bereich des ersten Verbindungselements 4 bzw. des Bauelements 3 ausgebildet.

Das zweite Verbindungselement 5 weist eine rechteckige Form auf, um zwei quadratische Außenflächen zweier Grundkörper 1 zu überdecken und damit eine Kopplung zwischen den beiden Grundkörpern 1 bereitzustellen. Der Grundkörper 1 ist damit quasi als "Zweierelement" ausgebildet. Zum Überdecken und Koppeln von drei oder vier Grundkörpern 1 kann das zweite Verbindungselement 5 alternativ hierzu als "Dreierelement" oder "Viererelement" ausgebildet sein. Ein "Viererelement" könnte eine im Wesentlichen quadratische Form aufweisen.

Bei dem vorliegenden Ausführungsbeispiel ist der Grundkörper 1 als Würfel ausgebildet. Der flächige Bereich des ersten Verbindungselements 4 weist eine quadratische Grundform auf. Das Bauelement 3 hat die Ausgestaltung eines Vierkantrohrs mit einem rechteckigen Innendurchgang. Es sind jedoch auch andere Ausgestaltungen des Grundkörpers 1, der Verbindungselemente 4 und 5 und des Bauelements 3 möglich.

Das zweite Verbindungselement 5 kann Positionierelemente 8 nicht nur auf der in Fig. 3 gezeigten Vorderseite 13, sondern auch auf der in Fig. 3 nicht gezeigten Rückseite oder nur auf dieser Rückseite aufweisen. In besonders vielseitiger und vorteilhafter Weise sind Positionierelemente 8 sowohl auf der Vorderseite 13 als auch auf der Rückseite ausgebildet. Diese besonders vorteilhafte Ausgestaltung ist Fig. 1 implizit entnehmbar, da dort die Rückseite des zweiten Verbindungselements 5 mit dem Grundkörper 1 in Anlage gelangt bzw. ist.

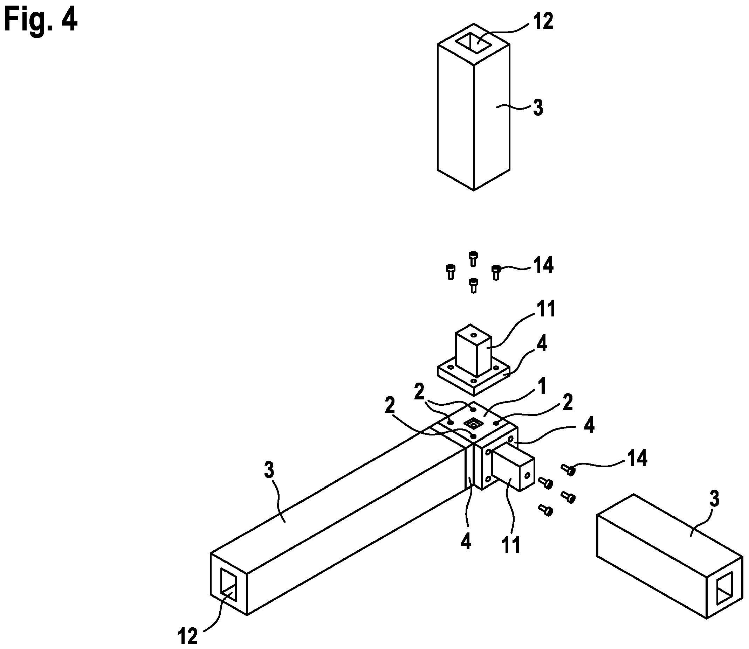

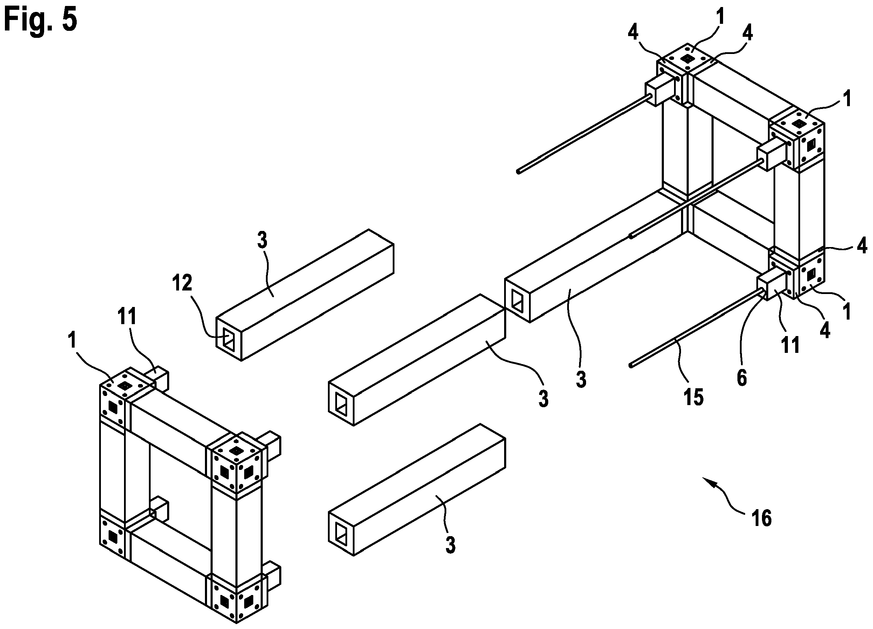

Die Fig. 4 und 5 zeigen den Aufbau eines Moduls 16 eines Bauwerks mittels der erfindungsgemäßen Kopplungsvorrichtung. Dabei wird gemäß Fig. 4 an drei Außenflächen des Grundkörpers 1 jeweils ein Bauelement 3 mittels jeweils eines ersten Verbindungselements 4 angekoppelt. Zur Fixierung der ersten Verbindungselemente 4 an dem Grundkörper 1 werden Kopplungsmittel in Form von Schrauben 14 verwendet, wobei in entsprechenden Durchgängen 2 des Grundkörpers 1 geeignete Innengewinde für ein Einschrauben der Schrauben 14 ausgebildet sind. Die Schrauben 14 weisen Köpfe auf, die im zusammengebauten Zustand des Moduls 16 in Vertiefungen 7 der Durchgänge 6 der ersten Verbindungselemente 4 versenkt sind.

In Fig. 5 sind als Stäbe 15 ausgebildete Koppelelemente gezeigt, die in Durchgänge 6 der Positionierelemente 11 der ersten Verbindungselemente 4 einsteckbar sind und sich im zusammengebauten Zustand des Moduls 16 jeweils durch die Bauelemente 3 hindurch erstrecken, um eine sichere Kopplung der Komponenten zu ermöglichen. Dabei können die Stäbe 15 oder Koppelelemente Außengewinde zum Eingriff mit Innengewinnenden in Durchgängen 2 des Grundkörpers 1 aufweisen. Bei dem hier gezeigten Ausführungsbeispiel ergibt sich im zusammengesetzten Zustand der Komponenten ein im Wesentlichen quaderförmiges Modul 16, wobei die Grundelemente 1 als Eckelemente des Moduls 16 ausgebildet sind und damit einen integralen Bestandteil des Moduls 16 bilden.

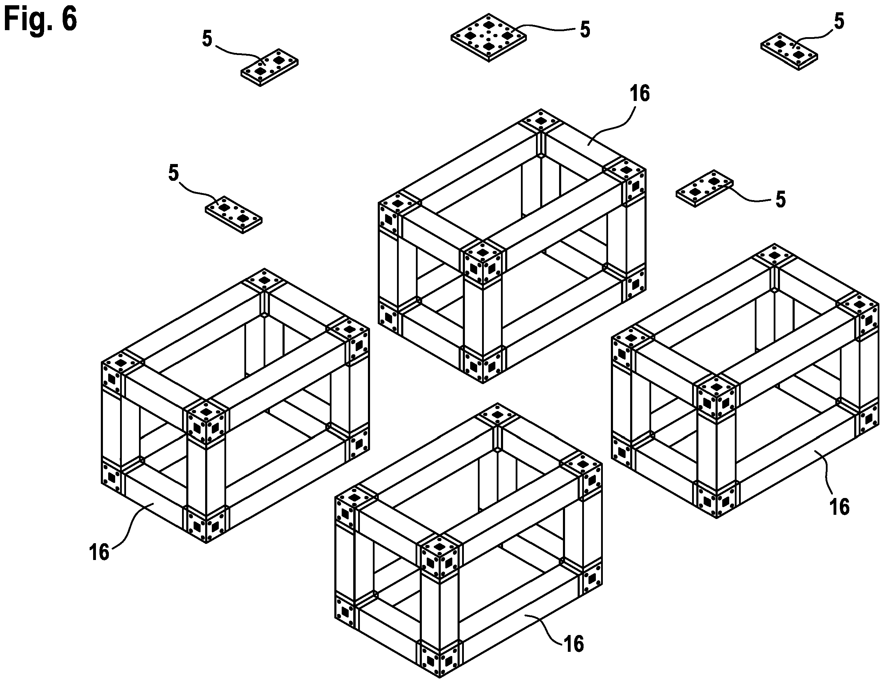

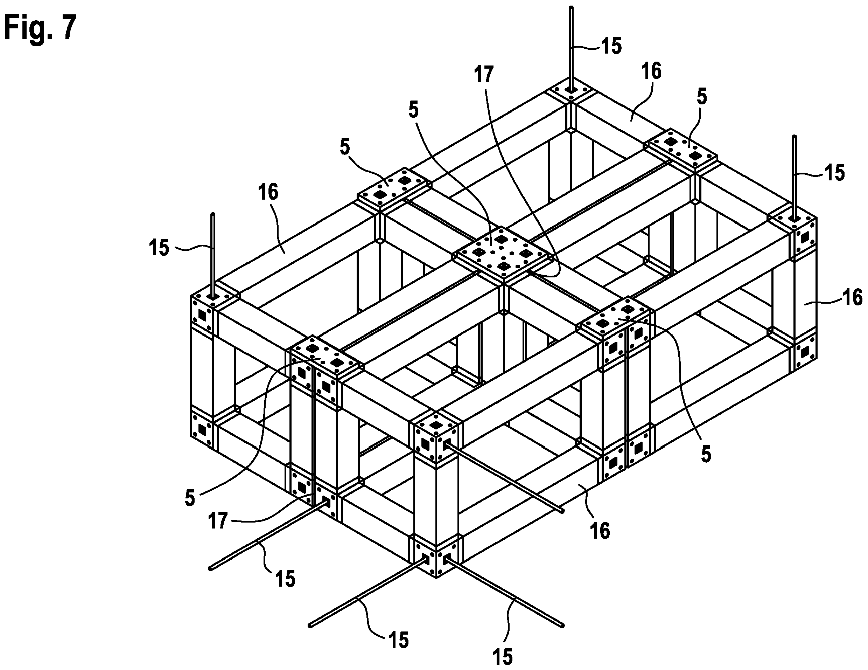

Die Fig. 6 und 7 zeigen den Aufbau eines aus vier Modulen 16 zusammengesetzten Gegenstands, wobei die vier Module 16 jeweils dem in der Fig. 5 gezeigten Modul 16 entsprechen. Im Hinblick auf den Zusammenbau der Module 16 darf daher auf die diesbezügliche Beschreibung zu den Fig. 4 und 5 verwiesen werden. Gemäß den Fig. 6 und 7 werden die vier Module 16 zu einem Quader zusammengefügt, wobei zweite Verbindungselemente 5 zur Kopplung nebeneinander angeordneter Grundkörper 1 verwendet sind. In der Mitte einer oberen Außenfläche des Quaders ist ein als "Viererelement" ausgebildetes zweites Verbindungselement 5 zur Verbindung und Überdeckung von vier nebeneinander angeordneten Grundkörpern 1 verwendet. Die vier Grundkörper 1 sind zur Bildung einer quadratischen Form in geeigneter Weise nebeneinander angeordnet. Im Hinblick auf eine besonders hohe Stabilität des aus den vier Modulen 16 erzeugten Quaders kann an jeder Stelle, an der zwei oder mehr Grundkörper 1 nebeneinander angeordnet sind, ein zweites Verbindungselement 5 angebracht werden. Dies könnte bei dem hier gezeigten Ausführungsbeispiel zusätzlich an den Seitenflächen und/oder an der Unterseite des Quaders erfolgen.

Zur weiteren Erhöhung der Stabilität und Verbesserung der Statik des erzeugten Quaders oder Gegenstands oder Bauwerks kann auch in Zwischenräumen 17 zwischen nebeneinander angeordneten Grundkörpern 1 ein zweites Verbindungselement 5 angeordnet werden. Dabei kann beispielsweise in dem Zwischenraum 17 unterhalb des "Viererelements" ein als "Zweierelement" ausgebildetes zweites Verbindungselement 5 angeordnet werden. Auch können "halbe" "Zweierelemente" in Zwischenräumen 17 angeordnet werden, siehe den im unteren Bereich der Fig. 7 bezeichneten Zwischenraum 17.

Des Weiteren sind in Fig. 7 Stäbe 15 als Koppelelemente an einigen Grundkörpern 1 beispielhaft eingezeichnet, um beispielsweise weitere Module 16 oder weitere aus beispielsweise vier Modulen 16 zusammengesetzte Quader an unterschiedlichen Seiten des Quaders anzukoppeln. Beispielsweise können zwei Quader der in Fig. 7 gezeigten Art übereinander angeordnet und im Hinblick auf eine sichere Verbindung mittels der Stäbe 15 gekoppelt werden. Stäbe 15 können selbstverständlich in mehreren oder in sämtlichen Grundkörpern 1 angeordnet werden, die zum sicheren Ankoppeln beispielsweise weiterer Module 16 oder Quader erforderlich oder nützlich sind. Basierend auf den hier gezeigten Modulen 16 können unterschiedlichste Bauwerke - wie beispielsweise Hochhäuser - oder Gegenstände realisiert werden.

Mit der erfindungsgemäßen Kopplungsvorrichtung können quasi beliebig große Bauwerke wie beispielsweise Gebäude oder Häuser auf einfache, sichere und schnelle Weise in Modulbauweise errichtet werden.

Hinsichtlich weiterer vorteilhafter Ausgestaltungen der erfindungsgemäßen Kopplungsvorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Grundkörper
- 2: Durchgang
- 3: Bauelement
- 4: erstes Verbindungselement
- 5: zweites Verbindungselement
- 6: Durchgang
- 7: Vertiefung
- 8: Positionierelement
- 9: Gegenelement
- 10: Seitenfläche
- 11: Positionierelement
- 12: Gegenelement
- 13: Vorderseite
- 14: Schraube
- 15: Stab
- 16: Modul
- 17: Zwischenraum

## Patentansprüche

1. Kopplungsvorrichtung für den modularen Aufbau von Bauwerken oder Gegenständen, mit einem mindestens einen Durchgang (2) oder mindestens eine Ausnehmung aufweisenden und mit mindestens einem Bauelement (3) eines Bauwerks oder Gegenstands koppelbaren Grundkörper (1), wobei der mindestens eine Durchgang (2) oder die mindestens eine Ausnehmung zum Zusammenwirken mit einem Kopplungsmittel für ein Koppeln des mindestens einen Bauelements (3) mit dem Grundkörper (1) ausgebildet ist, wobei der Grundkörper (1) als Eckelement oder Randelement eines Moduls des Bauwerks oder Gegenstands ausgebildet ist, wobei dem Grundkörper (1) mindestens ein im Wesentlichen zwischen dem Grundkörper (1) und dem mindestens einen Bauelement (3) wirkendes erstes Verbindungselement (4) zugeordnet ist und/oder wobei dem Grundkörper (1) mindestens ein zwei oder mehrere Grundkörper (1) koppelndes zweites Verbindungselement (5) zugeordnet ist, wobei das mindestens eine erste Verbindungselement (4) und/oder das mindestens eine zweite Verbindungselement (5) jeweils mindestens ein Positionierelement (8) zum kraft- und/oder formschlüssigen Zusammenwirken mit mindestens einem entsprechenden Gegenelement (9) des Grundkörpers (1) aufweisen oder aufweist und wobei das mindestens eine Positionierelement (8) und/oder das mindestens eine Gegenelement (9) eine rechteckige oder quadratische Form aufweisen oder aufweist,
**dadurch gekennzeichnet, dass** die rechteckige oder quadratische Form des mindestens einen Positionierelements (8) und/oder des mindestens einen Gegenelements (9) abgeschrägte Seitenbereiche oder Seitenflächen (10) aufweisen oder aufweist.

2. Kopplungsvorrichtung nach Anspruch 1, **dadurch gekennzeichnet, dass** das mindestens eine Positionierelement (8) als von dem mindestens einen ersten oder zweiten Verbindungselement (4, 5) abragendes Eingriffselement und das mindestens eine Gegenelement (9) als Vertiefung in dem Grundkörper (1) ausgebildet sind oder dass das mindestens eine Positionierelement (8) als Vertiefung in dem mindestens einen ersten oder zweiten Verbindungselement (4, 5) und das mindestens eine Gegenelement (9) als von dem Grundkörper (1) abragendes Eingriffselement ausgebildet sind.

3. Kopplungsvorrichtung nach Anspruch 1 oder 2, **dadurch gekennzeichnet, dass** das mindestens eine Positionierelement (8) und/oder das mindestens eine Gegenelement (9) - vorzugsweise mittig oder zentral - auf oder in jeweils einem flächigen Bereich des Grundkörpers (1) oder des mindestens einen ersten oder zweiten Verbindungselements (4, 5) ausgebildet sind oder ist.

4. Kopplungsvorrichtung nach einem der Ansprüche 1 bis 3, **dadurch gekennzeichnet, dass** das mindestens eine erste Verbindungselement (4) mindestens ein Positionierelement (11) zum - vorzugsweise kraft- und/oder formschlüssigen - Zusammenwirken mit mindestens einem entsprechenden - vorzugsweise komplementär zu dem mindestens einen Positionierelement (11) ausgebildeten - Gegenelement (12) des mindestens einen Bauelements (3) aufweist.

5. Kopplungsvorrichtung nach Anspruch 4, **dadurch gekennzeichnet, dass** das mindestens eine Positionierelement (11) als von dem mindestens einen ersten Verbindungselement (4) abragendes Einsteck- oder Eingriffselement und das mindestens eine Gegenelement (12) als Ausnehmung oder Durchgang in dem mindestens einen Bauelement (3) ausgebildet sind oder dass das mindestens eine Positionierelement (11) als Ausnehmung oder Durchgang in dem mindestens einen ersten Verbindungselement (4) und das mindestens eine Gegenelement (12) als von dem mindestens einen Bauelement (3) abragendes Einsteck- oder Eingriffselement ausgebildet sind.

6. Kopplungsvorrichtung nach Anspruch 4 oder 5, **dadurch gekennzeichnet, dass** das mindestens eine Positionierelement (11) und/oder das mindestens eine Gegenelement (12) - vorzugsweise mittig oder zentral - auf oder in jeweils einem flächigen Bereich des mindestens einen ersten Verbindungselements (4) oder des mindestens einen Bauelements (3) ausgebildet sind oder ist.

7. Kopplungsvorrichtung nach einem der Ansprüche 4 bis 6, **dadurch gekennzeichnet, dass** das mindestens eine Positionierelement (11) und/oder das mindestens eine Gegenelement (12) eine im Wesentlichen rechteckige oder quadratische Form oder Querschnittsform mit vorzugsweise abgeschrägten Seitenbereichen oder Seitenflächen aufweisen oder aufweist.

8. Kopplungsvorrichtung nach einem der Ansprüche 1 bis 7, **dadurch gekennzeichnet, dass** der mindestens eine Durchgang (2) oder die mindestens eine Ausnehmung in dem Grundkörper (1) ein Innengewinde zum Zusammenwirken mit dem Kopplungsmittel aufweist.

9. Kopplungsvorrichtung nach einem der Ansprüche 1 bis 8, **dadurch gekennzeichnet, dass** das mindestens eine erste Verbindungselement (4) und/oder das mindestens eine zweite Verbindungselement (5) mindestens einen Durchgang (6) für das Kopplungsmittel aufweisen oder aufweist.

10. Kopplungsvorrichtung nach Anspruch 9, **dadurch gekennzeichnet, dass** der mindestens eine Durchgang (6) für das Kopplungsmittel in dem mindestens einen ersten Verbindungselement (4) und/oder in dem mindestens einen zweiten Verbindungselement (5) eine vorzugsweise schräg oder konisch ausgebildete Vertiefung (7) oder Einsenkung für das Kopplungsmittel aufweist.

11. Kopplungsvorrichtung nach einem der Ansprüche 1 bis 10, **dadurch gekennzeichnet, dass** in mindestens einem der Positionierelemente (8, 11) oder Gegenelemente (9, 12) des Grundkörpers (1), des mindestens einen ersten Verbindungselements (4) und/oder des mindestens einen zweiten Verbindungselements (5) ein Durchgang (2, 6) für das Kopplungsmittel ausgebildet ist.

## Claims

1. Coupling device for the modular construction of structures or objects, having a main body (1) which has at least one through-opening (2) or at least one recess and which can be coupled to at least one component (3) of a structure or object, wherein the at least one through-opening (2) or the at least one recess is designed for interacting with a coupling means for coupling the at least one component (3) to the main body (1), wherein the main body (1) is designed as a corner element or edge element of a module of the structure or object,
wherein at least one first connecting element (4) acting substantially between the main body (1) and the at least one component (3) is assigned to the main body (1) and/or wherein at least one second connecting element (5) coupling two or more main bodies (1) is assigned to the main body (1), wherein the at least one first connecting element (4) and/or wherein at least one second connecting element (5) each have at least one positioning element (8) for frictional and/or positive interacting with at least one corresponding mating element (9) of the main body (1) and wherein the at least one positioning element (8) and/or the at least one mating element (9) have a rectangular or square shape,
**characterized in that** the rectangular or square shape of the at least one positioning element (8) and/or of the at least one mating element (9) has beveled side regions or side surfaces (10).

2. Coupling device according to claim 1, **characterized in that** the at least one positioning element (8) is designed as an engagement element projecting from the at least one first or second connecting element (4, 5) and the at least one mating element (9) is designed as a recess in the main body (1), or **in that** the at least one positioning element (8) is designed as a recess in the at least one first or second connecting element (4, 5) and the at least one mating element (9) is designed as an engagement element projecting from the main body (1).

3. Coupling device according to claim 1 or 2, **characterized in that** the at least one positioning element (8) and/or the at least one mating element (9) are or is formed - preferably centrally or in the center - on or in a respective planar region of the main body (1) or of the at least one first or second connecting element (4, 5).

4. Coupling device according to any of the claims 1 to 3, **characterized in that** the at least one first connecting element (4) has at least one positioning element (11) for - preferably frictional and/or positive - interacting with at least one corresponding - preferably complementary to the at least one positioning element (11) - mating element (12) of the at least one component (3).

5. Coupling device according to claim 4, **characterized in, that** the at least one positioning element (11) is formed as an insertion or engagement element projecting from the at least one first connecting element (4) and the at least one mating element (12) is formed as a recess or through-hole in the at least one component (3), or that the at least one positioning element (11) is formed as a recess or through-hole in the at least one first connecting element (4) and the at least one mating element (12) is formed as an insertion or engagement element projecting from the at least one component (3).

6. Coupling device according to claim 4 or 5, **characterized in that** the at least one positioning element (11) and/or the at least one mating element (12) are or is formed - preferably centrally or in the center - on or in a respective planar region of the at least one first connecting element (4) or of the at least one structural element (3).

7. Coupling device according to any of the claims 4 to 6, **characterized in that** the at least one positioning element (11) and/or the at least one mating element (12) has or have a substantially rectangular or square shape or cross-sectional shape with preferably beveled side regions or side surfaces.

8. Coupling device according to any of the claims 1 to 7, **characterized in that** the at least one through-opening (2) or the at least one recess in the main body (1) has an internal thread for interacting with the coupling means.

9. Coupling device according to any of the claims 1 to 8, **characterized in that** the at least one first connecting element (4) and/or the at least one second connecting element (5) have or has at least one through-opening (6) for the coupling means.

10. Coupling device according to claim 9, **characterized in that** the at least one through-opening (6) for the coupling means in the at least one first connecting element (4) and/or in the at least one second connecting element (5) have or has a preferably oblique or conical depression (7) or indentation for the coupling means.

11. Coupling device according to any of the claims 1 to 10, **characterized in that** in at least one of the positioning elements (8, 11) or mating elements (9, 12) of the main body (1), the at least one first connecting element (4) and/or the at least one second connecting element (5) a through-opening (2, 6) for the coupling means is formed.

## Revendications

1. Dispositif d'accouplement pour la construction modulaire d'ouvrages ou d'objets, avec un corps de base (1) comprenant au moins un passage (2) ou au moins un évidement et pouvant être couplé avec au moins un élément de construction (3) d'un ouvrage ou d'un objet, dans lequel l'au moins un passage (2) ou l'au moins un évidement est conçu pour interagir avec un moyen d'accouplement pour un couplage de l'au moins un élément de construction (3) avec le corps de base (1), dans lequel le corps de base (1) est conçu comme un élément angulaire ou un élément de bord d'un module de l'ouvrage ou de l'objet,
dans lequel, au corps de base (1), correspond au moins un premier élément de liaison (4) agissant globalement entre le corps de base (1) et l'au moins un élément de construction (3) et/ou dans lequel, au corps de base (1) correspond au moins un deuxième élément de liaison (5) couplant deux corps de base (1) ou plus, dans lequel l'au moins un premier élément de liaison (4) et/ou l'au moins un deuxième élément de liaison (5) comprennent chacun au moins un élément de positionnement (8) pour l'interaction par force et/ou par complémentarité de forme avec au moins un contre-élément (9) correspondant du corps de base (1) et dans lequel l'au moins un élément de positionnement (8) et/ou l'au moins un contre-élément (9) présente une forme rectangulaire ou carrée,
**caractérisé en ce que** la forme rectangulaire ou carrée de l'au moins un élément de positionnement (8) et/ou de l'au moins un contre-élément (9) comprend des parties latérales ou des surfaces latérales (10) chanfreinées.

2. Dispositif d'accouplement selon la revendication 1, **caractérisé en ce que** l'au moins un élément de positionnement (8) est conçu comme un élément d'emboîtement dépassant de l'au moins un premier ou deuxième élément de liaison (4, 5) et l'au moins un contre-élément (9) est conçu comme un renfoncement dans le corps de base (1) et **en ce que** l'au moins un élément de positionnement (8) est conçu comme un renfoncement dans l'au moins un premier ou deuxième élément de liaison (4, 5) et l'au moins un contre-élément (9) est conçu comme un élément d'emboîtement dépassant du corps de base (1).

3. Dispositif d'accouplement selon la revendication 1 ou 2, **caractérisé en ce que** l'au moins un élément de positionnement (8) et/ou l'au moins un contre-élément (9) sont ou est disposé - de préférence de manière centrale - sur ou dans respectivement une zone plane du corps de base (1) ou de l'au moins un premier ou deuxième élément de liaison (4, 5).

4. Dispositif d'accouplement selon l'une des revendications 1 à 3, **caractérisé en ce que** l'au moins un premier élément de liaison (4) comprend au moins un élément de positionnement (11) pour l'interaction - de préférence par force ou par complémentarité de forme - avec au moins un contre-élément (12) - conçu de préférence de manière complémentaire de l'au moins un élément de positionnement (11) - de l'au moins un élément de construction (3).

5. Dispositif d'accouplement selon la revendication 4, **caractérisé en ce que** l'au moins un élément de positionnement (11) est conçu comme un élément d'enfichage ou d'emboîtement dépassant de l'au moins un premier élément de liaison (4) et l'au moins un contre-élément (12) est conçu comme un évidement ou un passage dans l'au moins un élément de construction (3) ou **en ce que** l'au moins un élément de positionnement (11) est conçu comme un évidement ou un passage dans l'au moins un premier élément de liaison (4) et l'au moins un contre-élément (12) est conçu comme un élément d'enfichage ou d'emboîtement dépassant de l'au moins un élément de construction (3).

6. Dispositif d'accouplement selon la revendication 4 ou 5, **caractérisé en ce que** l'au moins un élément de positionnement (11) et/ou l'au moins un contre-élément (12) sont ou est disposé - de préférence de manière centrale - sur ou dans respectivement une zone plane de l'au moins un premier élément de liaison (4) ou de l'au moins un élément de construction (3).

7. Dispositif d'accouplement selon l'une des revendications 4 à 6, **caractérisé en ce que** l'au moins un élément de positionnement (11) et/ou l'au moins un contre-élément (12) présente une forme globalement rectangulaire ou carrée ou une forme de section transversale avec des parties latérales ou des surfaces latérales chanfreinées.

8. Dispositif d'accouplement selon l'une des revendications 1 à 7, **caractérisé en ce que** l'au moins un passage (2) ou l'au moins un évidement dans le corps de base (1) présente un filetage interne pour une interaction avec le moyen d'accouplement.

9. Dispositif d'accouplement selon l'une des revendications 1 à 8, **caractérisé en ce que** l'au moins un premier élément de liaison (4) et/ou l'au moins un deuxième élément de liaison (5) comprend au moins un passage (6) pour le moyen d'accouplement.

10. Dispositif d'accouplement selon la revendication 9, **caractérisé en ce que** l'au moins un passage (6) pour le moyen d'accouplement dans l'au moins un premier élément de liaison (4) et/ou dans l'au moins un deuxième élément de liaison (5) présente un renfoncement (7) ou une dépression, de préférence oblique ou conique, pour le moyen d'accouplement.

11. Dispositif d'accouplement selon l'une des revendications 1 à 10, **caractérisé en ce que**, dans l'au moins un des éléments de positionnement (8, 11) ou contre-éléments (9, 12) du corps de base (1), de l'au moins un premier élément de liaison (4) et/ou de l'au moins un deuxième élément de liaison (5), est réalisé un passage (2, 6) pour le moyen d'accouplement.
